# EUROPEAN PATENT SPECIFICATION

(11) **EP 3 504 980 B1**
(45) Date of publication and mention of the grant of the patent: **28.08.2024**
(21) Application number: 18215522.6
(22) Date of filing: 21.12.2018
(51) Int. Cl.: A23G 1/40

(54) **CHOCOLATE AND SIMILAR PRODUCTS CONTAINING HONEY POWDER AND THE PRODUCTION METHOD OF THESE PRODUCTS**
SCHOKOLADE UND ÄHNLICHE PRODUKTE MIT HONIGPULVER UND HERSTELLUNGSVERFAHREN DIESER PRODUKTE
CHOCOLAT ET PRODUITS SIMILAIRES CONTENANT UNE POUDRE DE MIEL ET PROCÉDÉ DE PRODUCTION DE CES PRODUITS

(30) Priority: 26.12.2017 TR 201721879
(43) Date of publication of application: 03.07.2019
(73) Proprietor: Eti Gida Sanayi Ve Ticaret Anonim Sirketi, Odunpazari/Eskisehir (TR)
(72) Inventor: KANATLI, Ahmet Firuzhan, Eskisehir (TR)
(74) Representative: Yamankaradeniz, Kemal

(56) References cited:
- EP-A1- 2 532 248
- WO-A1-01/56397
- WO-A1-2009/027039
- CN-A- 105 076 621
- GR-A- 20110 100 735
- TR-A2- 201 714 061
- TR-A2- 201 714 061
- US-A- 2 621 128
- US-A- 3 357 839
- US-A1- 2005 266 135

## Description

### Technical Field

The invention relates to the chocolate containing honey powder, and the production method of these products.

The invention relates to chocolate which contains a honey powder as a sweetening component instead of refined sugar, obtained by impregnation of the honey in the adhesive liquid phase, partially or completely, into the milk and/or milk powder and/or whey and/or whey powder and/or cocoa powder, and to the production methods of these products.

### Prior Art

Chocolate is specified as the product containing cocoa products with sugar and/or sweetener, and if necessary, with the addition of other food components except animal fats other than milk fat, and milk and/or milk products, and the additives allowed in Regulation on Turkish Food Codex, and prepared in compliance with the general rules and technique laid down. It is classified as dark chocolate, milk chocolate, white chocolate, compound chocolate and praline according to the ingredients and their proportions.

Chocolate production mainly involves mixing (premixing), thinning (grinding), conching (kneading) and tempering. Dry raw materials in the desired chocolate recipe are mixed and finely ground until it becomes powder. The mixture that becomes powder is subjected to conching with cocoa butter and a liquid chocolate mixture is obtained. By tempering the chocolate mixture with controlled cooling and heating method, liquid chocolate is obtained. The said liquid chocolate is poured into the molds or coated on the desired product and cooled, to produce the desired chocolate product.

Various components in solid or liquid form are used in products such as chocolate, filler, confectionery depending on the end product moisture content and processability conditions. The moisture content of the components used is very important in terms of the quality, shelf life and rheological properties of the final product. The components with high moisture content adversely affect the rheological and flavor properties of both the mixture or the paste and the end product. For this reason, the use of water and high humidity food components is avoided in the production of chocolate and chocolate products. The causes for this are as follows:
- in the final chocolate product, the presence of water reduces the thermal resistance by decreasing the melting temperature of chocolate, and disrupts its melting character in mouth, that is, the crystal structure and rheological properties (viscosity, flow point),
- when chocolate contains water, it causes the sucrose to dissolve and crystallize on the surface by creating a sugar blooming in chocolate, and adversely affects the physical properties of chocolate (color, hardness, etc.) as well as the integrity of its flavor.

In the molten chocolate, the moisture content is typically around 0.5 to 1.5%. The humidity above this amount causes the syrup layer to form on the sugar particles and increases the friction between each other. As a result, aggregations occur and viscosity increases.

The humidity of the raw materials used during chocolate production varies between 0,5% to 3%. Although there is a slight decrease in the value of the moisture due to the raw material during the conching, the high-moisture raw material input adversely affects the process of conching, stocking, molding and coating.

In order to prevent viscosity increase and to reduce the moisture content in the mixture, additional cocoa butter or equivalent to the permitted amount can be introduced during the conching process, but in this case, due to the change in the product's recipe, the quality characteristics of the product is changed significantly, the cost increases, and also energy (calories) value of the product increases.

For these reasons, ingredients with high water content such as honey, which can contain water in the range of 10-22%, cannot be used as a technique in the production of chocolate and similar products. Correspondingly, in current technique, instead of using 100% honey in chocolates, dried honey powder, which is prepared with the inputs such as maltodextrin, starch, gum arabic, gelatin, silicon dioxide, etc., and are not included in real chocolate components, is used. However, these honey powders used in the present technique contain some disadvantages. Substances such as maltodextrin and gum arabic, which are used as drying agents, cause agglomeration. The disadvantage of said maltodextrin is that it has a taste of starch type. This may adversely affect the physical properties (color, hardness, etc.) and flavor integrity of the final product. In addition, the presence of maltodextrin, starch, etc. carriers in some products such as chocolate and the like changes the quality of the product, the melting character of the chocolate in the mouth, in other words its crystal structure. In addition, it does not comply with the Communiqué on Chocolate.

The literature survey on the topic in the current technique revealed the following patent application:
In the World Patent Application entitled "Chocolate composition and manufacturing procedure", with publication number WO0156397 (A1), the invention refers to a sugar-free chocolate composition (with natural flavor) and the manufacturing procedure. Chocolate composition as described in this patent has the following mixture percentages: Milk powder (39% - 40%), honey (38% - 40%), coffee, mint or caramel flavor (0,2%), natural dye or cacao (7,8%), natural fat (15 - 12%). The product is obtained through a 3 steps procedure. The advantages of this chocolate composition are described as follows: It is a 100% natural, a highly energizing product rich in vitamins and mineral salts, and does not contain sugar or other chemical sweeter.

However, as previously mentioned, when the honey in the said patent used in conjunction with the water content, it also leads to deterioration of the physical and flavor properties of the chocolate. Natural oil and natural dye inputs are more compatible with the Cocolin (Compound Chocolate) which is prepared using vegetable oil and colorants rather than chocolate definitions in Communiqué on Chocolate which are prepared with cocoa butter.

In a Chinese patent application entitled "Fruit-flavored chocolate", with publication number CN105076621 (A), the invention discloses a fruit-flavored chocolate which consists of the following raw materials in parts by weight: cocoa liquor 30-40 parts, cocoa butter 10-15 parts, honey 5-10 parts, black sesame seed powder 2-4 parts, wild jujubes 5-10 parts, jasmine flowers 2-4 parts, henry steudnera tubers 2-4 parts, and dry apple grains 20-25 parts. However, because of the use of water in the content of honey, the total water content in chocolate is increasing. The increase in the amount of water in chocolate again adversely affects the rheological and flavor characteristics.

In the China patent application, titled 'Castanea-mollisima-bakery chocolate cake - shaped honey', with publication number CN104397517 (A), the honey ratio in the composition ranges between 39.3% to 43.9%. However, the product does not comply with the chocolate types described in the Communiqué on Chocolate. The product is in a dessert style with chocolate.

In the United states patent application, titled "Compositions of fructose and glucose containing inulin", with publication number US20050266135A1, honey compositions containing inulin in a weight ratio to the honey in minimum amounts of at least about 0.25%, 2%, 5%, 10%, 15%, or 20%. The said document also mentioned chewy dark chocolate confection which containing inulin, non-fat dried milk , honey, dark chocolate, butter. However, document does not comply with the chocolate that comprising a honey powder as sweeting component and not containing refined sugar.

In the patent application numbered GR20110100735A a method for the preparation of herb-enriched chocolate-based products is disclosed. The said method comprise the following; melting of couverture chocolate in a bain marie; mixing of the liquid chocolate with tahini, honey, herbs and dried fruit; shaping into a mould; cooling of the final product for a precise period of time. However, document does not comply with the chocolate without refined sugar and use a honey powder as sweeting component.

In the World Patent Application entitled " Process and confectionery product produced thereby ", with publication number WO2009027039 (A1), the invention refers to a process for producing a confectionery product and to the confectionery product produced by the process. However, document does not comply with the chocolate that comprising a honey powder as sweeting component and not containing refined sugar.

In the United states patent application, titled "Dried honey-milk product", with publication number US3357839A, the dry, non-caking composition comprise of dried honey, a dried milk product, and moisture, wherein the weight ratio of the honey and milk is about 10-75 parts honey solids to about 90-25 parts milk solids. However, the product does not comply with honey powder that comprise whey, whey powder or cocoa powder, and using in chocolate composition as sweeting component.

In the European Patent Application entitled "lyotropic composition of carbohydrates in fats, method for obtaining it application thereof in the preparation of chocolate and substitutes", with publication number EP2532248A1, a lyotropic composition of carbohydrates in fats and the method for producing it. However, the said document does not include honey powder that comprise whey, whey powder or cocoa powder, and using in chocolate composition as sweeting component.

In the United States patent application, titled "Dried honey-milk product", with publication number US2621128A, the invention referred to a process for the preparation of a 'dried honey-milk product. In the said process, mixture is forming which honey with at least one amorphous lactose containing milk product of the group consisting of dried whole milk, dried skim milk, dried buttermilk, and dried whey, in the weight ratio of about 10 to 70 parts honey solids to about to 30 parts milk solids. However, document does not comply with the chocolate that comprising a honey powder as sweeting component and not containing refined sugar.

As a result, due to the above-mentioned drawbacks and the inadequacy of the existing solutions, an improvement in the technical field has been required.

### The Purpose of Invention

The present invention relates to production method of chocolates containing honey powder and these products that meets the above-mentioned requirements, eliminates all disadvantages and brings some additional advantages.

The main purpose of the invention is to present chocolate which contains a honey powder as a sweetening component instead of refined sugar, obtained by impregnation of the honey in the adhesive liquid phase into the milk and/or milk powder and/or whey and/or whey powder and/or cocoa powder, and to present a production method for these products.

Another purpose of the invention is to develop chocolate in novel flavoring and taste profiles by the use of honey species as a sweetener that are traditionally produced and having a disintegrating flavor in chocolate and similar products.

Another purpose of the invention is to prevent chocolate from adversely changing both physical and flavor characteristics when it contained water, due to the characteristics of chocolate produced with honey powder using the components of milk and/or milk powder and/or whey and/or whey powder and/or cocoa powder.

Another purpose of the invention is to develop a new generation of milk, white and bitter chocolate products that are partially or completely flavored with honey powder.

Another purpose of the invention is that there is no starch taste in the end product since the honey powder used does not contain maltodextrin.

Another object of the invention is to produce new generation chocolate products with improved nutrients because of both the sweetening properties of honey powder and the preservation of many nutritional properties such as vitamins and minerals.

In order to fulfill the above-mentioned purposes, the invention is a sugar-free chocolate product classified as bitter chocolate, milk chocolate, white chocolate to be presented in the food industry, comprising honey powder as a sweetening component which is obtained by drying of the honey in the adhesive liquid phase by impregnation into at least one compound selected from the milk , milk powder , whey , whey powder , cocoa powder; and comprising at least one compound selected from cocoa butter , cocoa liquor cocoa powder , milk powder , emulsifier and not comprising refined sugar.

In order to fulfill the above-mentioned purposes, the invention is a method to produce a chocolate, wherein; it comprises following steps,
a) mixing of following raw materials;
   - compounds selected from cocoa butter, cocoa liquor, cocoa powder, milk powder and emulsifier, and
   - honey powder which is obtained by drying of the honey by impregnation into at least one compound selected from milk, milk powder, whey, whey powder and cocoa powder, as sweeting component,
   until the mixture becomes homogeneous,
b) thinning of the homogeneous mixture firstly in the double cylinder and then in the quinary cylinder, until the particle size is between 10 to 50 micrometer, preferably 15-40 micrometer,
c) conching of the chocolate mixture, which has been turned into powder after the thinning step,
d) the process of tempering the polymorphic cocoa oil in chocolate to avoid the formation of unstable crystals that cause unwanted blooming,
e) pouring into molds/coating of the tempered chocolate,
f) cooling of the poured into molds or coated chocolate.

The structural and characteristic features and all advantages of the invention outlined in the drawings below and in the detailed description made by referring these figures will be understood clearly, therefore the evaluation should be made by taking these figures and detailed explanation into consideration.

### Detailed Description of the Invention

In this detailed description, chocolate comprising honey powder, and the components and parameters preferred in the production method of these products are explained only to provide a better understanding of the subject and without limiting effects.

In one embodiment of the invention, the use of honey powdered chocolate is considered. The invention relates to the partial or complete use of honey powder, which is mentioned in patent TR2017/14061 having moisture max. 3%, in the production of chocolate, cocolin (compound chocolate), praline and similar products, as a substitute for refined sugar for sweetening.

The method for the production of refined sugar-free chocolate according to the invention, flavored with honey powder mentioned in patent TR2017/14061;
- mixing the cocoa butter and/or cocoa liquor and/or cocoa powder and/or milk powder and/or emulsifier and honey powder as raw materials until the mixture becomes homogeneous,
- thinning (refining) of the homogeneous mixture firstly in the double cylinder and then in the quinary cylinder, until the particle size is between 10 to 50 micrometer, preferably 15-40 micrometer,
- conching of the chocolate mixture, which has been turned into powder after the thinning (refining) step,
- the process of tempering the polymorphic cocoa oil in chocolate to avoid the formation of unstable crystals that cause unwanted fat bloom,
- pouring into molds/coating of the tempered chocolate,
- cooling of the poured into molds or coated chocolate,
steps in the process.

In one embodiment of the invention, the chocolate flavored with honey powder can be produced as a milk chocolate containing honey powder, honey powdered white chocolate and honey powdered bitter chocolate according to the ingredients and rates of the recipe.

Table 1 below shows the raw materials used in the milk chocolate recipe containing honey powder and their usage rates:

**Table 1: Milk chocolate recipe containing honey powder**

| **Raw Material** | **Available Quantity By Weight In Standard Chocolate (%)** | **Available Quantity By Weight In Chocolate with Honey Powder (%)** |
|---|---|---|
| **Honey Powder** (preferably 50% honey dry substance and 50% milk and/or milk powder and/or whey and/or whey powder and/or cocoa powder dry substance) | 0 | 5-60 |
| **Cocoa Liquor** | 5-25 | 5-25 |
| **Cocoa Butter** | 15-40 | 15-40 |
| **Emulsifier** | 0,1-2 | 0,1-2 |

Honey powder used in the production of milk chocolate containing honey powder prescribed in Table 1, is a honey powder obtained by impregnation of the honey in the adhesive liquid phase into the milk and/or milk powder and/or whey and/or whey powder and/or cocoa powder, wherein; comprising preferably 50% honey dry substance and 50% milk and/or milk powder and/or whey and/or whey powder and/or cocoa powder dry substance.

In one embodiment of the invention, the milk chocolate containing honey powder may contain up to 35% by weight of cocoa powder in addition to the recipe given in Table 1.

In one embodiment of the invention, the milk chocolate containing honey powder may contain up to 35% by weight of milk powder in addition to the recipe given in Table 1.

Milk chocolate containing honey powder obtained according to the recipe given in Table 1 can be classified as "refined sugar (sucrose) free" or "sugar-free" chocolate. When the alternative products are needed, refined sugar (sucrose) can be added to the recipe above, with a maximum amount of 50% by weight.

Table 2 below shows the raw materials used in the white chocolate recipe containing honey powder and their usage rates:

**Table 2: White chocolate recipe containing honey powder**

| **Raw Material** | **Available Quantity By Weight In Standard Chocolate (%)** | **Available Quantity By Weight In Chocolate with Honey Powder (%)** |
|---|---|---|
| **Honey Powder** | 0 | 5-70 |
| (preferably 50% honey dry substance and 50% milk and/or milk powder and/or whey and/or whey powder dry substance) | | |
| **Cocoa Butter** | 15-40 | 15-40 |
| **Emulsifier** | 0,1-2 | 0,1-2 |

Honey powder used in the production of white chocolate containing honey powder prescribed in Table 2, is a honey powder obtained by impregnation of the honey in the adhesive liquid phase into the milk and/or milk powder and/or whey and/or whey powder, wherein; comprising preferably 50% honey dry substance and 50% milk and/or milk powder and/or whey and/or whey powder dry substance.

In one embodiment of the invention, the white chocolate containing honey powder may contain up to 40% by weight of milk powder in addition to the recipe given in Table 2.

White chocolate containing honey powder obtained according to the recipe given in Table 2 can be classified as "refined sugar (sucrose) free" or "sugar-free" chocolate. When the alternative products are needed, refined sugar (sucrose) can be added to the recipe above, with a maximum amount of 50% by weight.

Table 3 below shows the raw materials used in the bitter chocolate recipe containing honey powder and their usage rates:

**Table 3: Bitter chocolate recipe containing honey powder**

| **Raw Material** | **Available Quantity By Weight In Standard Chocolate (%)** | **Available Quantity By Weight In Chocolate with Honey Powder (%)** |
|---|---|---|
| **Honey Powder** | 0 | 5-80 |
| (preferably 50% honey dry substance and 50% cocoa powder dry substance) | | |
| **Cocoa Liquor** | 10-50 | 10-50 |
| **Cocoa Butter** | 5-30 | 5-30 |
| **Emulsifier** | 0,1-2 | 0,1-2 |

Honey powder used in the production of bitter chocolate containing honey powder prescribed in Table 3, is a honey powder obtained by impregnation of the honey in the adhesive liquid phase into the cocoa powder, wherein; comprising preferably 50% honey dry substance and 50% cocoa powder dry substance.

In one embodiment of the invention, the bitter chocolate containing honey powder may contain up to 35% by weight of cocoa powder in addition to the recipe given in Table 3.

Bitter chocolate containing honey powder obtained according to the recipe given in Table 3 can be classified as "refined sugar (sucrose) free" or "sugar-free" chocolate. When the alternative products are needed, refined sugar (sucrose) can be added to the recipe above, with a maximum amount of 50% by weight.

One of the most important advantages of chocolate of the invention is that there is no need to have crystal sugar or sweetener in their structure. With the honey powder, which can be added to any type of food product to be sweetened, the need for crystal sugar is significantly reduced and chocolate that is healthier and have longer shelf-life can be obtained. However, according to the preference, the crystal sugar with a maximum of 50% by weight can be added to the mixture.

The invention is a sweet food product to be presented in the food industry, such as milk chocolate, white chocolate, bitter chocolate containing honey powder as a sweetening component which is obtained by impregnation of the honey in the adhesive liquid phase into the milk and/or milk powder and/or whey and/or whey powder and/or cocoa powder; comprising of chocolate made from cocoa butter and/or cocoa liquor and/or cocoa powder and/or milk powder and/or emulsifier.

The invention is a chocolate production method comprising the method steps described below:

### a) Mixing of the honey powder made of following raw materials; milk and/or milk powder and/or whey and/or whey powder and/or cocoa powder, with cocoa butter and/or cocoa liquor and/or cocoa powder and/or milk powder and/or emulsifier until the mixture becomes homogeneous:

According to the type of chocolate containing honey powder desired to be produced, the appropriate recipe is selected. The raw materials in the content of the recipe are weighed in accordance with the amount of the substance given.

After dry raw materials of honey powder made of honey and milk and/or milk powder and/or whey powder and/or cocoa powder, and dry substances made of cocoa powder and/or milk powder in the selected recipe are being subjected to a premix for 5±2 minutes at 40±5°C, 1/3 of the amount of cocoa butter in the recipe and 1/2 of the amount of emulsifier is mixed and kneaded to make a homogeneous, thick masscuite. The lecithin, polyglycerol polyricinoleate esters etc., may be used as emulsifiers. If the cocoa liquor is preferred in the recipe to be used, it should be added during mixing.

### b) Thinning (refining) of the homogeneous mixture firstly in the double cylinder and then in the quinary cylinder, until the particle size is between 10 to 50 micrometer, preferably 15-40 micrometer:

The homogeneous mixture obtained in the previous step is firstly ground and then thinned in a double cylinder and then in a quinary cylinder. The grinding rollers crush the fibrous cocoa material and milk solids. Particle size in the mixture is reduced to 10-50 µm preferably to 15-40 µm. The surfaces of the grounded particles are wetted by the oil of cocoa butter or of the solid substance mixture mentioned in the previous step.

### c) Conching of the chocolate mixture, which has been turned into powder after the thinning (refining) step:

In the conching which is the next step after the refining process, the chocolate mixture, whose solid particles are thoroughly shrunk, is further mixed and beaten and aerated. With the intense mixing during the conching, the flavor and taste of chocolate is improved and its fluidity increases. The chocolate obtained during the conching stage is homogeneous, the taste of chocolate is enriched and reaches the melting consistency in the mouth. Again, as a result of the conching, the residues from the fermentation of the cocoa bean products such as acids, aldehydes and ketones fly, and following the further improvement of oxidation of the polyphenols, the sharpness of the aroma decreases. Caramelization and maillard reactions, which give a special taste to the product during chocolate production, are progressed to the optimal level. Another purpose of the conching process is to reduce humidity, prevent phase separations, and adjust viscosity and flow point properties.

After mixing and refining steps, the chocolate mixture, which is turned into powder, is brought to the large heated overwhelming mixers called conch and the remaining 2/3 of the amount of cocoa butter used in the selected recipe is added to the mixture. In the production of chocolate containing honey powder, the conching process is carried out between 4-72 hours and in the temperature range of 45-85°C depending on the type and quality of the chocolate containing honey powder. The temperature is preferably 65±10°C for milk chocolate containing honey powder, 50±5°C for white chocolate containing honey powder, and 65±5°C for bitter chocolate containing honey powder. The viscosity during the conching process is 10000±3000 cP at 40±5 °C, and the particle size is 15-40 micrometers.

The remaining 1/2 of the amount of the lubricating emulsifier in the recipe is added at this stage and the conching process is continued for another 0.5-2 hours more. In order to avoid unwanted stability changes in chocolate, the amount of emulsifier to be added should be carefully controlled. The viscosity and flow point of chocolate is adjusted with emulsifiers. Due to the emulsifier, viscosity of the chocolate is adjusted and this makes it become suitable for molding. If aroma is preferred in alternative products, the addition of aroma substances can be adjusted at this stage.

### d) The process of tempering the polymorphic cocoa oil in chocolate to avoid the formation of unstable crystals that cause unwanted fat bloom:

Tempering is an essential process step to prevent the formation of easily soluble, unstable cocoa oil crystals and to ensure the formation of stable "core crystals". In order to avoid the polymorphic cocoa oil in chocolate to form unstable crystals that cause unwanted fat bloom, chocolate should be tempered and controlled carefully. The formation of a dull gray surface, called "fat bloom," occurs as a result of bad or uncontrolled tempering.

The chocolate mixture standardized in the previous process step is cooled from 45-85 °C to 27-29 °C controlledly and then heated again to 30-32 °C controlledly.

Both cooling and heating processes must be carried out with a constant mixing. Thus, in the viscous chocolate solution where the unstable b crystals are melted and their stable b crystals remain in, which will lead to crystallization only in the subsequent cooling step.

### e) Pouring into molds/coating of the tempered chocolate:

Chocolate that completed crystal formation in the previous process step is first poured into the molds of the desired size and shape or coated by pouring onto another desired product.

### f) Cooling of the chocolate that is poured into molds or coated:

Chocolate poured into molds or coated on another product is cooled in cooling tunnels at temperature between 10 to 18°C for 10 to 60 minutes . The chocolate that is cooled and become solid is packed and stored with the preferred packaging method.

Packaging is carried out using paper, aluminum, plastic based materials or combinations of which are not harmful to health and which will protect the properties of chocolates. After packaging, the tablet chocolates or coated chocolate products are stored in odorless environments with humidity set at 14 to 22°C.

When any kinds of food products that are sweetened with honey powder are consumed, it is equivalent to sugar in terms of energy, but much more healthy foods will be consumed. The most important advantage of the invention is to provide more healthy and nutritious products by sweetening them with honey powder.

The chocolate of the invention, which contain honey powder and which are produced according to the invention, have superior qualities than the existing chocolates and other diabetic/dietary chocolates. In this way, chocolate that people of all ages in the society eat fondly, becomes healthier.

With the use of honey powder instead of refined sugar, in chocolate, it is possible to obtain foods with low moisture content so that the shelf life of the products is prolonged and is much easier to store. In addition, to the consumers with the idea that the products becomes more natural and healthy with the use of natural ingredients, it is possible to offer a more healthy and nutritious form of chocolate sweetened with honey powder, instead of chocolate sweetened with refined sugar.

## Claims

1. A milk chocolate comprising a honey powder as sweeting component, and not comprising refined sugar;
wherein; said milk chocolate comprises:
• 5 - 60% honey powder by weight, wherein said honey powder consisting of 50% dry substance of at least one compound selected from milk, milk powder, whey, whey powder and cocoa powder and 50% dry substance of honey by weight;
• 5 - 25% cocoa liquor by weight,
• 15 - 40% cocoa butter by weight,
• 0.1- 2% emulsifier by weight.

2. The chocolate according to Claim 1, wherein; said emulsifier is lecithin or polyglycerol polyricinoleate esters.

3. The chocolate according to Claim 1, wherein; said milk chocolate comprises maximum of 35% cocoa powder by weight.

4. The chocolate according to Claim 1, wherein; said milk chocolate comprises maximum of 35% milk powder by weight.

5. A white chocolate comprising a honey powder as sweeting component, and not comprising refined sugar;
wherein; said white chocolate comprises:
• 5 - 70% honey powder by weight, wherein; said honey powder consisting of 50% dry substance of at least one compound selected from milk, milk powder, whey, whey powder and 50% dry substance of honey by weight;
• 15 - 40% cocoa butter by weight,
• 0.1- 2% emulsifier by weight.

6. The chocolate according to Claim 5 wherein; said white chocolate contains maximum of 40% milk powder by weight.

7. A bitter chocolate comprising a honey powder as sweeting component, and not comprising refined sugar;
wherein; said bitter chocolate comprises:
• 5 - 80% honey powder by weight, wherein; said honey powder consisting of 50% dry substance of cocoa powder and 50% dry substance of honey by weight;
• 10 - 50% cocoa liquor by weight,
• 5 - 30% cocoa butter by weight,
• 0.1- 2% emulsifier by weight.

8. The chocolate according to Claim 7, wherein; said bitter chocolate comprises maximum of 35% cocoa powder by weight.

9. A method to produce a chocolate said in any of the Claims 1 to 8, **characterized by** comprising the process steps of:
a) mixing following raw materials,
- compounds selected from cocoa butter, cocoa liquor, cocoa powder, milk powder and emulsifier, and
- honey powder which is obtained by drying of the honey by impregnation into at least one compound selected from milk, milk powder, whey, whey powder and cocoa powder, as sweeting component,
until the mixture becomes homogeneous,
b) thinning of the homogeneous mixture firstly in the double cylinder and then in the quinary cylinder, until the particle size is between 10 to 50 micrometer, preferably 15-40 micrometer,
c) conching of the chocolate mixture, which has been turned into powder after the thinning step,
d) the process of tempering the polymorphic cocoa oil in chocolate to avoid the formation of unstable crystals that cause unwanted blooming,
e) pouring into molds/coating of the tempered chocolate,
f) cooling of the poured into molds or coated chocolate.

10. The method according to Claim 9, wherein the process step 'a' comprising;
- premixing of dry raw materials in recipe selected from honey powder, cocoa powder, milk powder for 5±2 minutes at 40±5°C,
- and the resulting mixture is mixed with 1/3 of the amount of cocoa butter in the recipe and 1/2 of the amount of emulsifier and if it is on the recipe the whole amount of the cocoa liquor, and kneaded to make a homogeneous, thick masscuite.

11. The method according to Claim 9, wherein the process step 'c' comprising;
- following the refining of the mixture in process step 'b', adding the remaining 2/3 of the amount of cocoa butter used in the selected recipe to the mixture; and conching between 4-72 hours and in the temperature range of 45-85°C , the viscosity is 10000±3000 cP at 40±5 °C, and the particle size is 15-40 µm,
- adding the remaining 1/2 of the amount of the lubricating emulsifier in the recipe at this stage and the conching process is continued for another 0.5-2 hours more.

12. The method according to Claim 9, wherein the process step 'd' comprising tempering by cooling down the chocolate conched in the 'c' process step to 27-29 °C and then heating again to 30-32°C controlledly.

13. The method according to Claim 9, wherein the process step 'f' comprising keeping the chocolate poured into molds or coated on another product in cooling tunnels at temperature between 10 to 18°C for 10 to 60 minutes .

## Patentansprüche

1. Milchschokolade, ein Honigpulver als Süßungskomponente umfassend und keinen raffinierten Zucker umfassend;
wobei; die Milchschokolade Folgendes umfasst:
• 5 - 60 Gew.-% Honigpulver, wobei das Honigpulver aus 50 Gew.-% Trockensubstanz von mindestens einer Verbindung, die aus Milch, Milchpulver, Molke, Molkepulver und Kakaopulver ausgewählt ist, und 50 Gew.-% Trockensubstanz von Honig besteht;
• 5 - 25 Gew.-% Kakaomasse,
• 15 - 40 Gew.-% Kakaobutter,
• 0,1 - 2 Gew.-% Emulgator.

2. Schokolade gemäß Anspruch 1, wobei; der Emulgator Lecithin oder Polyglycerin-Polyricinoleatester ist.

3. Schokolade gemäß Anspruch 1, wobei; die Milchschokolade maximal 35 Gew.-% Kakaopulver umfasst.

4. Schokolade gemäß Anspruch 1, wobei; die Milchschokolade maximal 35 Gew.-% Milchpulver umfasst.

5. Weiße Schokolade, ein Honigpulver als Süßungskomponente umfassend und keinen raffinierten Zucker umfassend;
wobei; die weiße Schokolade Folgendes umfasst:
• 5 - 70 Gew.-% Honigpulver, wobei; das Honigpulver aus 50 Gew.-% Trockensubstanz von mindestens einer Verbindung, die aus Milch, Milchpulver, Molke, Molkepulver ausgewählt ist, und 50 Gew.-% Trockensubstanz von Honig besteht;
• 15 - 40 Gew.-% Kakaobutter,
• 0,1 - 2 Gew.-% Emulgator.

6. Schokolade gemäß Anspruch 5, wobei; die weiße Schokolade maximal 40 Gew.-% Milchpulver enthält.

7. Bitterschokolade, ein Honigpulver als Süßungskomponente umfassend und keinen raffinierten Zucker umfassend;
wobei; die Bitterschokolade Folgendes umfasst:
• 5 - 80 Gew.-% Honigpulver, wobei; das Honigpulver aus 50 Gew.-% Trockensubstanz von Kakaopulver und 50 Gew.-% Trockensubstanz von Honig besteht;
• 10 - 50 Gew.-% Kakaomasse,
• 5 - 30 Gew.-% Kakaobutter,
• 0,1 - 2 Gew.-% Emulgator.

8. Schokolade gemäß Anspruch 7, wobei; die Bitterschokolade maximal 35 Gew.-% Kakaopulver umfasst.

9. Verfahren zum Herstellen einer Schokolade nach einem der Ansprüche 1 bis 8, **dadurch gekennzeichnet, dass** es die folgenden Prozessschritte umfasst:
a) Mischen folgender Rohstoffe,
- Verbindungen, die aus Kakaobutter, Kakaomasse, Kakaopulver, Milchpulver und Emulgator ausgewählt sind, und
- Honigpulver, das durch Trocknen des Honigs durch Imprägnieren in mindestens eine Verbindung, die aus Milch, Milchpulver, Molke, Molkepulver und Kakaopulver ausgewählt ist, gewonnen wird, als Süßungskomponente,
bis die Mischung homogen wird,
b) Verdünnen der homogenen Mischung zunächst im Doppelzylinder und dann im Fünffachzylinder, bis die Partikelgröße zwischen 10 bis 50 Mikrometer, vorzugsweise 15-40 Mikrometer, liegt,
c) Conchieren der Schokoladenmischung, die nach dem Schritt des Verdünnens zu Pulver geworden ist,
d) den Prozess eines Temperierens des polymorphen Kakaoöls in der Schokolade, um die Bildung instabiler Kristalle zu vermeiden, die zu unerwünschtem Reif führen,
e) Gießen in Formen/Auftragen der temperierten Schokolade,
f) Abkühlen der in Formen gegossenen oder aufgetragenen Schokolade.

10. Verfahren gemäß Anspruch 9, wobei der Prozessschritt ,a' Folgendes umfassend;
- Vormischen trockener Rohstoffe in dem Rezept, die aus Honigpulver, Kakaopulver, Milchpulver ausgewählt sind, für 5±2 Minuten bei 40±5 °C,
- und die resultierende Mischung wird mit 1/3 der Menge Kakaobutter in dem Rezept und 1/2 der Menge Emulgator und, sofern in dem Rezept angegeben, der gesamten Menge Kakaomasse vermischt und geknetet, um eine homogene, dicke Füllmasse zu bereiten.

11. Verfahren gemäß Anspruch 9, wobei der Prozessschritt ,c' Folgendes umfassend;
- nach dem Verfeinern der Mischung im Prozessschritt ,b', Hinzufügen der restlichen 2/3 der Menge Kakaobutter, die in dem gewählten Rezept verwendet wird, zu der Mischung; und Conchieren zwischen 4-72 Stunden und im Temperaturbereich von 45-85 °C, wobei die Viskosität 10000±3000 cP bei 40±5 °C beträgt und die Partikelgröße 15-40 µm beträgt,
- Hinzufügen der restlichen 1/2 der Menge des Schmieremulgators in dem Rezept in dieser Stufe und der Conchierprozess wird für weitere 0,5-2 Stunden fortgesetzt.

12. Verfahren gemäß Anspruch 9, wobei der Prozessschritt ,d' Temperieren durch Abkühlen der im Prozessschritt ,c' conchierten Schokolade auf 27-29 °C und anschließendes kontrolliertes erneutes Erwärmen auf 30-32 °C umfassend.

13. Verfahren gemäß Anspruch 9, wobei der Prozessschritt 'f' Lagern der in Formen gegossenen oder auf ein anderes Produkt aufgetragenen Schokolade in Kühltunneln bei einer Temperatur zwischen 10 bis 18 °C für 10 bis 60 Minuten umfassend.

## Revendications

1. Chocolat au lait comprenant une poudre de miel en tant que composant édulcorant, et ne comprenant pas de sucre raffiné ;
ledit chocolat au lait comprenant :
• 5 - 60 % en poids de poudre de miel, ladite poudre de miel étant constituée de 50 % de substance sèche d'au moins un composé choisi parmi le lait, le lait en poudre, le lactosérum, la poudre de lactosérum et la poudre de cacao et 50 % en poids de substance sèche de miel ;
• 5 - 25 % en poids de liqueur de cacao,
• 15 - 40 % en poids de beurre de cacao,
• 0,1 - 2 % en poids d'émulsifiant.

2. Chocolat selon la revendication 1, ledit émulsifiant étant de la lécithine ou des esters de polyricinoléate de polyglycérol.

3. Chocolat selon la revendication 1, ledit chocolat au lait comprenant au maximum 35 % en poids de poudre de cacao.

4. Chocolat selon la revendication 1, dans lequel : ledit chocolat au lait comprenant au maximum 35 % en poids de lait en poudre.

5. Chocolat blanc comprenant une poudre de miel en tant que composant édulcorant, et ne comprenant pas de sucre raffiné ;
ledit chocolat blanc comprenant :
• 5 - 70 % en poids de poudre de miel, ladite poudre de miel étant constituée de 50 % de substance sèche d'au moins un composé choisi parmi le lait, le lait en poudre, le lactosérum, la poudre de lactosérum et 50 % en poids de substance sèche de miel ;
• 15 - 40 % en poids de beurre de cacao,
• 0,1 - 2 % en poids d'émulsifiant.

6. Chocolat selon la revendication 5, ledit chocolat blanc contenant au maximum 40 % en poids de lait en poudre.

7. Chocolat amer comprenant une poudre de miel en tant que composant édulcorant, et ne comprenant pas de sucre raffiné ;
ledit chocolat amer comprenant :
• 5 - 80 % en poids de poudre de miel, ladite poudre de miel étant constituée de 50 % de substance sèche de poudre de cacao et de 50 % en poids de substance sèche de miel ;
• 10 - 50 % en poids de liqueur de cacao,
• 5 - 30 % en poids de beurre de cacao,
• 0,1 - 2 % en poids d'émulsifiant.

8. Chocolat selon la revendication 7, ledit chocolat amer comprenant au maximum 35 % en poids de poudre de cacao.

9. Procédé pour produire un chocolat selon l'une quelconque des revendications 1 à 8, caractérisé en comprenant les étapes de processus de :
a) mélange des matières premières suivantes,
- des composés choisis parmi le beurre de cacao, la liqueur de cacao, la poudre de cacao, la poudre de lait et l'émulsifiant, et
- de la poudre de miel qui est obtenue par séchage du miel par imprégnation dans au moins un composé choisi parmi le lait, la poudre de lait, le lactosérum, la poudre de lactosérum et la poudre de cacao, en tant que composant édulcorant,
jusqu'à ce que le mélange devienne homogène,
b) fluidification du mélange homogène d'abord dans le cylindre double et ensuite dans le cylindre quinaire, jusqu'à ce que la taille des particules soit comprise entre 10 et 50 micromètres, de préférence entre 15 et 40 micromètres,
c) couchage du mélange chocolaté, qui a été transformé en poudre après l'étape de fluidification,
d) le processus de tempérage de l'huile de cacao polymorphe dans le chocolat pour éviter la formation de cristaux instables entraînant un efflorescence indésirable,
e) coulée dans des moules/enrobage du chocolat tempéré,
f) refroidissement du chocolat coulé dans des moules ou enrobé.

10. Procédé selon la revendication 9, ladite étape de processus 'a' comprenant :
- le prémélange de matières premières sèches dans une recette sélectionnée parmi la poudre de miel, la poudre de cacao,
le lait en poudre pendant 5 ±2 minutes à 40 ±5°C,
- et le mélange obtenu étant mélangé avec 1/3 de la quantité de beurre de cacao dans la recette et 1/2 de la quantité d'émulsifiant et si c'est dans la recette la totalité de la liqueur de cacao, et malaxé pour produire une masse cuite homogène et épaisse.

11. Procédé selon la revendication 9, ladite étape de processus 'c' comprenant :
- après le raffinage du mélange dans l'étape de processus 'b', l'ajout au mélange des 2/3 restants de la quantité de beurre de cacao utilisée dans la recette choisie ; et le couchage entre 4 et 72 heures et dans la plage de températures de 45-85°C, la viscosité étant de 10 000 ±3 000 cP à 40 ±5°C, et ladite taille de particules étant de 15-40 µm,
- l'ajout de la 1/2 restante de la quantité d'émulsifiant lubrifiant dans la recette à ce stade et ledit processus de couchage se poursuivant pendant encore 0,5-2 heures supplémentaires.

12. Procédé selon la revendication 9, ladite étape de processus 'd' comprenant le tempérage par refroidissement du chocolat conché dans l'étape de processus 'c' à 27-29°C et ensuite chauffage à nouveau à 30-32°C de manière régulée.

13. Procédé selon la revendication 9, ladite étape de processus 'f comprenant le maintien du chocolat versé dans des moules ou enrobé sur un autre produit dans des tunnels de refroidissement à une température comprise entre 10 et 18°C pendant 10 à 60 minutes.
